# EUROPÄISCHE PATENTSCHRIFT

(11) **EP 1 941 424 B1**
(45) Veröffentlichungstag und Bekanntmachung des Hinweises auf die Patenterteilung: **04.05.2011**
(21) Anmeldenummer: 06805453.5
(22) Anmeldetag: 20.10.2006
(51) Int. Cl.: G06K 9/00

(54) **VORRICHTUNG ZUR MESSUNG VON ERHÖHUNGEN UND/ODER VERTIEFUNGEN EINER OBERFLÄCHE**
DEVICE FOR MEASURING ELEVATIONS AND/OR DEPRESSIONS IN A SURFACE
DISPOSITIF POUR LA MESURE DES ÉLÉVATIONS ET/OU DES ABAISSEMENTS D' UNE SURFACE

(30) Priorität: 24.10.2005 DE 102005050807
(43) Veröffentlichungstag der Anmeldung: 09.07.2008
(73) Patentinhaber: Hossu, Dan, 55768 Welersbach (DE)
(72) Erfinder: Hossu, Dan, 55768 Welersbach (DE)
(74) Vertreter: Becker, Bernd
(86) Internationale Anmeldenummer: PCT/DE2006/001853
(87) Internationale Veröffentlichungsnummer: WO 2007/048388

(56) Entgegenhaltungen:
- WO-A1-99/37994
- WO-A2-01/69520
- DE-A1- 10 002 767
- US-A1- 2003 044 051
- US-B1- 6 195 448

## Beschreibung

Die Erfindung bezieht sich auf eine Vorrichtung zur Messung von Erhöhungen und/oder Vertiefungen einer flexiblen zumindest teillichtdurchlässigen Oberfläche nach Anspruch 1 und auf ein Verfahren zur Erkennung eines Fingerabdrucks oder Hand- bzw. Fußabdrucks nach den Ansprüchen 16 und 21.

Fingerabdruck-Erkennungssysteme umfassen in der Regel kapazitive oder optische Flächensensoren zur Erfassung charakteristischer Merkmale einer Fingerkuppe. Die aufgenommenen Signale werden oftmals von einem Aufnahmegerät mit in einem Speicher hinterlegten Fingerabdruckmerkmalen berechtigter Personen verglichen. Stimmt der von dem Fingerabdruck-Sensor aufgenommene Fingerabdruck mit einem hinterlegten Fingerabdruckmuster in wesentlichen Merkmalen überein, gibt das Aufnahmegerät ein entsprechendes Signal an eine Auswerte- und Steuereinrichtung, die beispielsweise ein Türschloss entriegelt. Versucht beispielsweise ein Unberechtigter sich Zugang zu verschaffen, wird dies bei einem Vergleich der aufgenommenen Fingerabdruckmerkmale des Unberechtigten mit den gespeicherten Fingerabdruckmerkmalen erkannt und eine Signalübertragung an die Auswerte- und Steuereinrichtung entweder unterdrückt oder ein Fehlversuchsignal übertragen. Als problematisch erweist sich die zuverlässige Erkennung von Falsifikaten, also beispielsweise eines abgetrennten Fingers eines Berechtigten oder einer Folie oder dergleichen mit dem Fingerabdruck eines Berechtigten.

Die DE 20 2004 001 624 U1 offenbart eine Fingerabdruck-Verifikationseinrichtung mit mindestens einem Fingerabdruck-Aufnahmegerät, das mit einer Auswerte- und Steuereinrichtung verbunden ist. Das Fingerabdruck-Aufnahmegerät weist einen Zeilensensor und eine Auswerteelektronik auf und die Auswerte- und Steuereinrichtung ist mit einer Zugangskontrolleinrichtung, insbesondere mit einem Einbruchmeldesystem, verbunden. Zur Erhöhung von Sicherheitsstandards sind die Zeilensensoren vorgesehen, die weniger leicht als Flächensensoren zu sabotieren sind, da bei einer langsamen Bewegung des Fingers über den Zeilensensor sukzessiv ein Bild der gesamten Fingerkuppe erzeugt wird. Darüber hinaus weist der Zeilensensor mehrere resistive, temperaturempfindliche Elemente auf, um eine Fehl-Erkennung durch die Verwendung einer Folie mit einem Fingerabdruck eines Berechtigten oder eines abgetrennten Fingers eines Berechtigten zu verhindern.

Im Weiteren zeigt die DE 699 20 126 T2 ein Fingerabdrucklesegerät mit einer Lichtquelle, einer Fotosensoreinrichtung, die mehrere auf der Lichtquelle ausgebildete Fotosensoren sowie eine auf den Fotosensoren ausgebildete Oberfläche umfasst, und einer auf der Fotosensoreinrichtung ausgebildeten durchsichtigen, lichtleitenden Schicht. Um die Verwendung eines auf ein Blatt kopierten Fingerabdrucks zu erkennen, wird bei einer Berührung des zweidimensionalen Fotosensors mit einem Paar durchsichtiger leitfähiger Schichten in dem Fingerabdrucklesegerät der elektrische Widerstand des berührenden Fingers erfasst, der bei der Verwendung eines Blattes nicht vorhanden ist.

Darüber hinaus offenbart die WO 01/69520 A2 eine Vorrichtung zur Messung von Erhöhungen und/oder Vertiefungen einer flexiblen zumindest teillichtdurchlässigen Oberfläche, wobei für die Messung die Oberfläche durch eine Fiberoptik mittels einer Lichtquelle beleuchtet wird und jede Fiberoptikfaser mit ihrer Längsachse senkrecht zu einer Auflagefläche für die Oberfläche ausgerichtet ist.

Im Weiteren beschreibt die US 2003/044 051 A1 ein Verfahren zur Erkennung eines Hand- bzw. Fingerabdrucks, wobei ein optischer Fotosensor und mindestens eine Lichtquelle mit einer Auswerte- und Steuereinheit gekoppelt sind und der Fotosensor unmittelbar nach dem Erfassen eines Kontaktes der Haut mit der Auflagefläche mehrere Helligkeitsmessungen durchführt, deren Ergebnisse die Auswerte- und Steuereinheit auswertet.

Schließlich zeigt die WO 99/37994 A1 eine Vorrichtung zum Messen der Absorption und Streuungseigenschaften eines Materials, die eine Lichtquelle, einen Lichtdetektor und Glasfasern unterschiedlicher Durchmesser umfasst, wobei jede Glasfaser zur Beleuchtung und Helligkeitsmessung dient.

Es ist Aufgabe der Erfindung, eine Vorrichtung und ein Verfahren der eingangs genannten Art zu schaffen, mit der bzw. dem zuverlässig eine Erkennung durchzuführen ist.

Erfindungsgemäß wird die Aufgabe bei der Vorrichtung mit den Merkmalen des Anspruchs 1 gelöst.

Mittels der Fiberglasstränge der Fiberoptik, also relativ dünner Fasern mit einem Durchmesser von ca. 6 µm, wird die Lichtstrahlung von der Lichtquelle, die beispielsweise infrarote Strahlung aussendet, im Auflichtverfahren zu der abzutastenden Oberfläche, insbesondere eines Fingers, und die von der Oberfläche reflektierte Lichtstrahlung zu dem Fotosensor übertragen. Die Übertragung der Lichtstrahlung erfolgt durch ein und dieselbe Faser der Fiberoptik. Es wird die optische Eigenschaft der Fiberoptik genützt, dass am Ausgang der Lichtstrahl in das dort befindlichen Medium anhand des Brechungsindex des Mediums besser oder schlechter einkoppelt, und dadurch weniger oder mehr Licht in die Glasfaser der Fiberoptik zurückreflektiert wird. Die menschliche Haut verhält sich wie ein Medium mit einem höheren Brechungsindex als die Luft. Die Oberfläche mit den Fiberglassträngen ist verhältnismäßig unempfindlich gegen Kratzer und eine normale Abnutzung beeinflusst nicht die Messwerte. Darüber hinaus entsteht ein gegenüber der Verwendung einer Glasplatte als Oberfläche kontrastreicheres Bild. In Ausgestaltung sind die Lichtquellen unterhalb der Oberfläche angeordnet. Durch das Auflichtverfahren kann die Vorrichtung Helligkeitsänderungen des reflektierten Lichts bei einer verhältnismäßig geringen Strahlungsintensität gegenüber der Durchlichtmethode besser registrieren und gleichzeitig die durch die Oberfläche bedingten Erhebungen und Vertiefungen feststellen. Darüber hinaus ist das Messverfahren mit Auflicht unabhängig von der Dicke der Oberfläche oder deren äußerer Farbe und wird von Umgebungslicht lediglich minimal beeinflusst, weshalb es relativ gut reproduzierbare Ergebnisse liefert. Dadurch, dass jede Fiberoptikfaser mit ihrer Längsachse senkrecht zu einer Auflagefläche für die Oberfläche, insbesondere für einen Finger, ausgerichtet ist, ist es möglich, dass das Messobjekt, also die Oberfläche insbesondere eines Fingers, durch eine Fiber beleuchtet wird und durch die gleiche Fiber die Lichtabsorption bzw. - reflexion gemessen wird.

Bevorzugt sind die Fiberglasstränge einstückig zu einer Fiberoptikplatte miteinander verbunden. Sonach umfasst die Faser- bzw. Fiberoptik eine Vielzahl parallel angeordnete Glasfasern als Lichtleiter, die zu einem mechanisch homogenen Block verschmolzen sind.

Um eine gute Einkoppelung des Lichts in die einzelnen Fiberoptiken zu erzielen, und einen Durchlichteffekt einer benachbarten Fiberoptik zu vermeiden, ist vorteilhafterweise der Fiberoptik stirnseitig eine entspiegelte, insbesondere mattierte, Fläche zugeordnet. Hierbei ist es möglich, der Fiberoptik ein separates Bauteil, beispielsweise in Form einer mattierten Scheibe, zuzuordnen oder die Fiberoptik selbst entsprechend zu bearbeiten. Vorzugsweise ist die der Lichtquelle zugewandte Stirnseite der Fiberoptik entspiegelt. In Ausgestaltung ist zur Entspiegelung bzw. Mattierung die Fiberoptik mit Antireflexion-Dünnschichten bzw. einem matten Lack beschichtet oder mit einer mattierten Folie beklebt. Die Oberflächenbeschichtung mit Antireflexion-Dünnschichten ist beispielsweise von Brillen oder Objektiven bekannt.

Im Weiteren sind zur Unterscheidung echter Finger von Falsifikaten entweder mehrere Licht unterschiedlicher Wellenlänge ausstrahlende Lichtquellen oder ein Farben erfassender Fotosensor vorgesehen. Beim Auflegen eines echten Fingers, also eines Fingers einer lebenden Person, wird Blut aus dem Gewebe der stark durchbluteten Fingerkuppe in der Nähe der Kontaktstelle des Fingers auf der dem Fotosensor zugeordneten Oberfläche aufgrund des ausgeübten Anpressdruckes verdrängt, womit eine messbare dynamische Farbänderung bzw. Helligkeitsänderung der zu dem Fotosensor reflektierten Lichtstrahlen einhergeht. Für diese Messung der Farbänderung ist es erforderlich, entweder mehrere Licht unterschiedlicher Farbe ausstrahlende Lichtquellen oder einen Farben erfassenden Fotosensor vorzusehen, um Veränderungen in der äußeren Hautschicht zu erfassen. Die Vorrichtung kann bei einer entsprechenden Intensität der Lichtstrahlung auch im Durchlichtverfahren arbeiten. Selbstverständlich ist auch die Verwendung der Fiberoptik als lichtdurchlässige Oberfläche mit den bereits erläuterten Vorteilen möglich. Durch die Verwendung der Fiberoptik ist es zusätzlich möglich, die Farbänderung mit dem Fingerabdruck zu koppeln und die Messung der vorhandenen Erhebungen und Vertiefungen des Fingerabdrucks unterschiedlich auszuwerten, um die Falsifikatabwehr zu erhöhen.

Zweckmäßigerweise strahlen die Lichtquellen weißes, rotes grünes und/oder blaues, insbesondere infrarotes Licht ab. Die Lichtquellen werden sequentiell eingeschaltet und das reflektierte Licht mit dem Fotosensor erfasst sowie mit einer rechnergesteuerten Auswerteeinheit verarbeitet.

Bevorzugt sind die Lichtquellen als Leuchtdioden ausgebildet, die preisgünstige Bauteile darstellen.

Um bei der Verwendung von weißem Licht die auftretenden Helligkeits- und Farbänderungen zuverlässig zu erfassen, ist vorzugsweise dem Fotosensor mindestens ein Farbfilter zugeordnet. Bei der Anordnung insbesondere mehrerer Farbfilter ist es auch möglich, sämtliche unterschiedlich farbiges Licht aussendende Lichtquellen gleichzeitig einzuschalten.

Bei einer weiteren Ausgestaltung ist der Fotosensor als Kamera ausgebildet. Die Kamera kann beispielsweise ein CCDBauteil (Charge-coupled Device) oder einen CMOS-Sensor (Complementary Metal Oxide Semiconductor) umfassen.

Erfindungsgemäß wird die Aufgabe bei einem Verfahren mit den Merkmalen des Anspruchs 16 gelöst.

Beim Auflegen eines Fingers eines lebenden Menschen auf die Messfläche entweicht das Blut aus dem Gewebe der Fingerkuppe in der Nähe der Kontaktstelle und die reflektierte sowie absorbierte Lichtstrahlung verändern sich in ihrem gemessenen Anteil sowie Spektrum. Diese Veränderung nimmt im Laufe der Zeit ab und ist den ersten ca. 300 ms nach dem Auflegen des Fingers am stärksten und bis ca. 1500 ms messbar, weshalb innerhalb dieser Zeitspanne mehrere Helligkeitsmessungen durchführt werden, die einen Rückschluss auf den Finger eines lebenden Menschen oder einen abgetrennten Finger bzw. ein sonstiges Falsifikat erlauben.

Um verhältnismäßig schnell nach dem Auflegen des Fingers mit den Helligkeitsmessungen zu beginnen, wird bevorzugt das Erfassen eines Kontaktes der Messfläche mit Haut mit einem kapazitiven oder resistiven Messverfahren durchgeführt. Diese Messverfahren sind dem Fachmann bei der Fingerabdruckerkennung hinreichend bekannt.

Nach einer weiteren Ausgestaltung wird bei jeder Helligkeitsmessung eine Lichtquelle mit einer anderen Farbe eingeschaltet. Durch die bei den verschiedenen Helligkeitsmessungen verwendeten unterschiedlichen Farben ist die Sicherheit bei der Erkennung von Falsifikaten wesentlich erhöht. Alternativ hierzu werden alle Lichtquellen gleichzeitig oder mindestens eine weißes Licht aussendende Lichtquelle eingeschaltet und mit einem Farbsensor oder dem Kamerasensor zugeordneten Farbfilter einfallende Lichtwellenlängen für die Helligkeitsmessungen unterschieden. Selbstverständlich kann auch eine IR- oder UV-Lichtquelle verwendet werden. Weiterhin kann auch das vorhandene Licht, wie z.B. natürliches Tageslicht oder Raumbeleuchtung, von der Sensorseite verwendet werden.

Vorteilhafterweise werden die Lichtquellen durch die Auswerte- und Steuereinheit gepulst, gesteuert oder permanent mit Spannung versorgt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

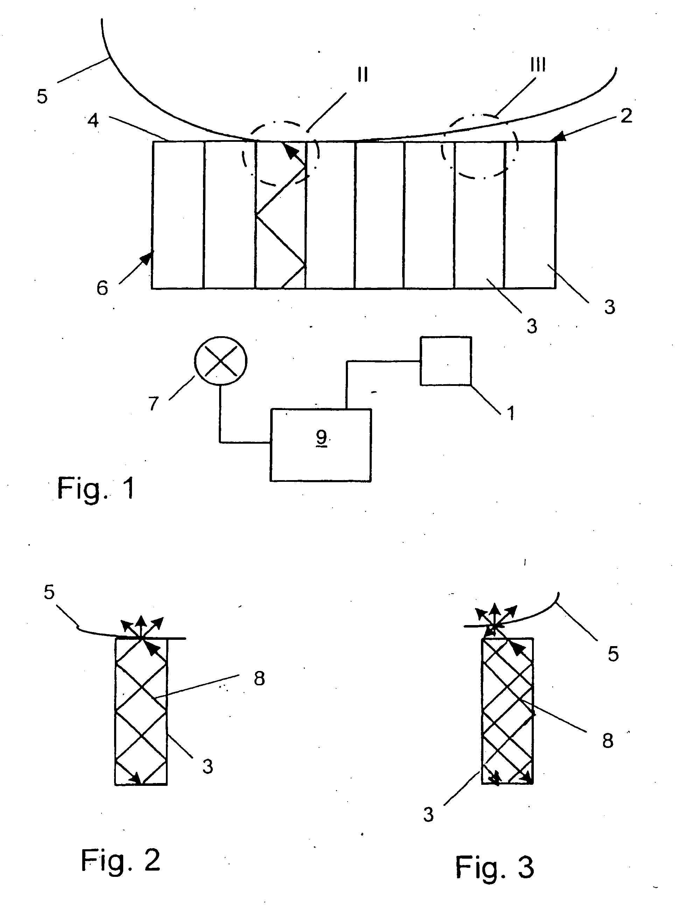

- Fig.1: eine schematische Schnittdarstellung eines erfindungsgemäßen Fingerabdruck-Erkennungssystems,
- Fig.2: eine Darstellung der Einzelheit II nach Fig. 1 und
- Fig.3: eine Darstellung der Einzelheit III nach Fig. 1.

Das Fingerabdruck-Erkennungssystem umfasst einen optischen Fotosensor 1, der unter einer Oberfläche 2 aus einer Vielzahl parallel angeordneter Fiberglasstränge 3, also Fiberoptiken, besteht, die mit ihren Längsachsen senkrecht zu einer Auflagefläche 4 für einen Finger 5 ausgerichtet und zu einem homogenen Block 6 (Fiberoptikplatte) verschmolzen sind. Unterhalb des Blocks 6, der eine Vielzahl von Fiberoptiken umfasst und eine Fiberoptikplatte bildet, ist neben dem als CMOS oder CCD-Kamera ausgebildeten Fotosensor 1 eine Lichtquelle 7 angeordnet, deren Lichtstrahlen 8 durch die Fiberglasstränge 3 zu dem Finger 5 geleitet und dort teilweise absorbiert und teilweise reflektiert werden. Das in die Fiberoptik zurückreflektierte Licht ist in Bereichen, in denen der Finger 5 auf der Oberfläche 2 aufliegt,
geringer als in Bereichen, in denen der Finger 5 zur Oberfläche 2 beabstandet ist, was dadurch verursacht ist, dass das Licht besser in den Finger 5 als in die Luft einkoppelt, da der Finger 5 einen höheren Brechungsindex als die Luft hat.

Beim Auflegen des Fingers 5, der Bestandteil eines lebenden Menschen ist, wird durch den Anlagedruck auf der Auflagefläche 4 Blut aus dem Gewebe verdrängt, womit eine Änderung der Helligkeit der reflektierten Lichtstrahlen einhergeht, die von dem Fotosensor 1 in mehreren unmittelbar aufeinander folgenden Helligkeitsmessungen detektiert wird. Im Weiteren erfasst der als Kamera ausgebildete Fotosensor 1 selbstverständlich auch die Erhebungen und Vertiefungen des Fingerabdrucks des Fingers 5 aufgrund der reflektierten Lichtstrahlen. Da der Fotosensor 1 unterschiedliche Farben erfasst bzw. die Beleuchtung in verschiedenen Spektralbereichen sequentiell erfolgt, werden neben der dynamischen Änderung der Helligkeit auch Farbänderungen beim Auflegen des Fingers 5 auf die Oberfläche 2 registriert, wobei sowohl Änderungen der Helligkeit als auch der Farbe in Bereichen, in denen der Finger 5 auf der Oberfläche 2 aufliegt geringer sind als in Bereichen, in denen der Finger 5 zur Oberfläche 2 beabstandet ist. Sämtliche Messwerte des Fotosensors 1 werden von einer Auswerte- und Steuereinheit 9 verarbeitet und beispielsweise mit gespeicherten Fingerabdrücken verglichen. Im Weiteren ist die Auswerte- und Steuereinheit 9 mit der Lichtquelle 7 verbunden, um diese mit Spannung zu versorgen.

## Patentansprüche

1. Vorrichtung zur Messung von Erhöhungen und/oder Vertiefungen einer flexiblen zumindest teillichtdurchlässigen Oberfläche, wobei für die Messung die Oberfläche durch eine Fiberoptik mittels einer Lichtquelle (7) beleuchtet wird und jede Fiberoptikfaser mit ihrer Längsachse senkrecht zu einer Auflagefläche für die Oberfläche ausgerichtet ist, **dadurch gekennzeichnet, dass** durch denselben Fiberglasstrang (3), durch den die Oberfläche beleuchtet wird, die Helligkeit des reflektierten Lichts mit einem Fotosensor (1) gemessen wird.

2. Vorrichtung nach Anspruch 1, **dadurch gekennzeichnet, dass** mehrere Fiberoptikfasern zusammengefasst zu einer Fiberoptikplatte als Auflagefläche für die zu messende Oberfläche dient und die Messung über alle Fiberoptikfasern gleichzeitig erfolgt.

3. Vorrichtung nach einem der Ansprüche 1 oder 2, **dadurch gekennzeichnet, dass** der Fiberoptik stirnseitig eine entspiegelte, insbesondere mattierte Fläche zugeordnet ist.

4. Vorrichtung nach Anspruch 3, **dadurch gekennzeichnet, dass** die der Lichtquelle (7) zugewandte Stirnseite der Fiberoptik entspiegelt ist.

5. Vorrichtung nach Anspruch 3 oder 4, **dadurch gekennzeichnet, dass** die Fiberoptik zur Entspiegelung bzw.
Mattierung mit Antireflexion-Dünnschichten bzw. einem matten Lack beschichtet oder mit einer mattierten Folie beklebt ist.

6. Vorrichtung nach einem der Ansprüche 1 bis 5, **dadurch gekennzeichnet, dass** mehrere Lichtquellen alle Fiberglasstränge (3) beleuchten.

7. Vorrichtung nach einem der Ansprüche 1 bis 6, **dadurch gekennzeichnet, dass** der Fotosensor ein Flächensensor ist.

8. Vorrichtung nach einem der Ansprüche 1 bis 6, **dadurch gekennzeichnet, dass** der Fotosensor als Kamera ausgebildet ist.

9. Vorrichtung nach einem der Ansprüche 1 bis 8, **dadurch gekennzeichnet, dass** die zu messende Oberfläche ein Finger oder eine Hand oder ein Fuß ist, wobei die Erhöhungen und/oder Vertiefungen Hautmuster sind.

10. Vorrichtung nach Anspruch 1, **dadurch gekennzeichnet, dass** entweder mehrere Licht unterschiedlicher Wellenlänge ausstrahlende Lichtquellen (2) oder ein Farben erfassender Fotosensor (1) vorgesehen sind.

11. Vorrichtung nach einem der Ansprüche 1 bis 10, **dadurch gekennzeichnet, dass** die Lichtquellen (7) weißes, rotes, grünes und/oder blaues, insbesondere infrarotes Licht abstrahlen.

12. Vorrichtung nach einem der Ansprüche 1 bis 11, **dadurch gekennzeichnet, dass** die Lichtquellen (7) als Leuchtdioden ausgebildet sind.

13. Vorrichtung nach einem der Ansprüche 1 bis 12, **dadurch gekennzeichnet, dass** dem Fotosensor (1) mindestens ein Farbfilter zugeordnet ist.

14. Vorrichtung nach einem der Ansprüche 1 bis 13, **dadurch gekennzeichnet, dass** dem Fotosensor (1) ein Graufilter zur Erhöhung der Immunität gegen Umbebungslicht zugeordnet ist.

15. Vorrichtung nach einem der Ansprüche 1 bis 13, **dadurch gekennzeichnet, dass** der Fiberoptikplatte (6) ein Graufilter zur Erhöhung der Immunität gegen das Umgebungslicht zugeordnet ist.

16. Verfahren zur Erkennung eines Fingerabdrucks oder Hand bzw. Fingerabdrucks, zum Betreiben der Vorrichtung nach einem der Ansprüche 1 bis 15, wobei ein optischer Fotosensor (1) und mindestens eine Lichtquelle (7) mit einer Auswerte- und Steuereinheit (9) gekoppelt sind, durch denselben Fiberglasstrang (3), durch den die Oberfläche beleuchtet wird, die Helligkeit des reflektierten Lichtes mit einem Fotosensor (1) gemessen wird, und der Fotosensor (1) unmittelbar nach dem Erfassen eines Kontaktes der Haut mit der Auflagefläche (4) mehrere Helligkeitsmessungen durchführt, deren Ergebnisse die Auswerte- und Steuereinheit (9) auswertet, **dadurch gekennzeichnet, dass** die Messung separat im Bereich der Erhöhungen und der Vertiefungen der Papillarlinien der Haut stattfindet..

17. Verfahren nach Anspruch 16, **dadurch gekennzeichnet, dass** das Erfassen eines Kontaktes der Auflagefläche (4) mit Haut mit einem kapazitiven, resistiven oder optischen Messverfahren durchgeführt wird.

18. Verfahren nach dem Anspruch 16 oder 17, **dadurch gekennzeichnet, dass** alle Lichtquellen gleichzeitig oder mindestens eine weißes oder infrarotes Licht aussendende Lichtquelle (7) eingeschaltet und mit einem dem Fotosensor (1) zugeordneten Farbfilter einfallende Lichtwellenlängen für die Helligkeitsmessungen unterschieden werden.

19. Verfahren nach Anspruch 18, **dadurch gekennzeichnet, dass** die Lichtquellen (7) durch die Auswerte- und Steuereinheit (9) gepulst, gesteuert oder permanent mit Spannung versorgt werden.

20. Verfahren nach Anspruch 19, **dadurch gekennzeichnet, dass** die verwendete Lichtquelle (7) eine natürliche Lichtquelle oder eine Umgebungsbeleuchtung ist.

21. Verfahren zur Unterscheidung eines lebenden Fingers oder einer Hand von einem Falsifikat unter Verwendung eines Verfahrens nach Anspruch 16, **dadurch gekennzeichnet, dass** sich die Helligkeit der mit Auflicht beaufschlagten Haut in verschiedenen Spektralbereichen in den ersten 300 bis 1500 ms nach dem Auflegen spezifisch durch die Blutverdrängung verändert, insbesondere bei einer Messung im Bereich des roten, insbesondere ca. 630 nm, und infraroten, insbesondere ca. 820 bis 880 nm, Lichtes.

## Claims

1. Device for measuring elevations and/or depressions of a flexible surface which is at least partially transmissive to light where, for measuring purposes, the surface is illuminated through a fibre-optic means using a light source (7) and each optical fibre is aligned with its longitudinal axis at a right angle to a contact surface for the surface, **characterised in that** the brightness of the reflected light is measured using a photo sensor (1) through the same fibreglass strand (3) through which the surface is illuminated.

2. Device according to claim 1, **characterised in that** several optical fibres combined into a fibre-optic plate serve as a contact surface for the surface to be measured and measuring is carried out via all optical fibres simultaneously.

3. Device according to one of claims 1 or 2, **characterised in that** an antireflective, in particular matted, surface is assigned to the end face of the fibre-optic means.

4. Device according to claim 3, **characterised in that** the end face of the fibre-optic means facing the light source (7) is antireflective.

5. Device according to claim 3 or 4, **characterised in that** the fibre-optic means are coated with antireflective thin films or a matte varnish or bonded with a matted film for antireflection or matting.

6. Device according to one of claims 1 to 5, **characterised in that** several light sources illuminate all the fibreglass strands (3).

7. Device according to one of claims 1 to 6, **characterised in that** the photo sensor is an area sensor.

8. Device according to one of claims 1 to 6, **characterised in that** the photo sensor is designed as a camera.

9. Device according to one of claims 1 to 8, **characterised in that** the surface to be measured is a finger or a hand or a foot, with the elevations and/or depressions being skin patterns.

10. Device according to claim 1, **characterised in that** either several light sources (2) giving off light of different wavelengths or a colour-detecting photo sensor (1) are provided.

11. Device according to one of claims 1 to 10, **characterised in that** the light sources (7) give off white, red, green and/or blue, in particular infrared, light.

12. Device according to one of claims 1 to 11, **characterised in that** the light sources (7) are designed as light-emitting diodes.

13. Device according to one of claims 1 to 12, **characterised in that** at least one colour filter is assigned to the photo sensor (1).

14. Device according to one of claims 1 to 13, **characterised in that** a grey filter is assigned to the photo sensor (1) to increase immunity to the ambient light.

15. Device according to one of claims 1 to 13, **characterised in that** a grey filter is assigned to the fibre-optic plate (6) to increase immunity to the ambient light.

16. Method for detecting a fingerprint or hand and fingerprint, for operating the device according to one of claims 1 to 15, with an optical photo sensor (1) and at least one light source (7) being coupled with an evaluation and control unit (9) through the same fibreglass strand (3) through which the surface is illuminated, the brightness of the reflected light being measured using a photo sensor (1), and with the photo sensor (1) carrying out several brightness measurements immediately after detection of contact of the skin with the contact surface (4), the results of these brightness measurements being evaluated by the evaluation and control unit (9), **characterised in that** measurement takes place separately in the area of the elevations and depressions of the papillary lines of the skin.

17. Method according to claim 16, **characterised in that** detection of contact of the contact surface (4) with skin is carried out using a capacitive, resistive or optical measuring method.

18. Method according to claim 16 or 17, **characterised in that** all light sources are switched on simultaneously or at least one light source (7) giving off white or infrared light is switched on, and incident light wavelengths are differentiated for the brightness measurements with a colour filter assigned to the photo sensor (1).

19. Method according to claim 18, **characterised in that** the light sources (7) are supplied with voltage in a pulsed, controlled or permanent manner by the evaluation and control unit (9).

20. Method according to claim 19, **characterised in that** the light source used (7) is a natural light source or ambient lighting.

21. Method for differentiating a living finger or a hand from a false one using a method according to claim 16, **characterised in that** the brightness of the skin subjected to incident light changes in various spectral ranges in the first 300 to 1500 ms after contact specifically as a result of blood displacement, in particular in the event of a measurement in the range of red light, in particular approx. 630 nm, and infrared light, in particular approx. 820 to 880 nm.

## Revendications

1. Dispositif pour la mesure des élévations et/ou abaissements d'une surface flexible au moins partiellement translucide dans lequel la surface est éclairée pour la mesure via une fibre optique au moyen d'une source de lumière (7) et où chaque fibre de la fibre optique est, de par son axe longitudinal, disposée de façon perpendiculaire à une surface d'appui pour la surface, **caractérisé en ce que** la clarté de la lumière réfléchie via le même toron de fibres de verre (3) est mesurée par un photocapteur (1).

2. Dispositif selon la revendication 1 **caractérisé en ce que** plusieurs fibres optiques sont combinées en une plaque de fibres optiques servant de surface d'appui pour la surface à mesurer et que le mesurage est réalisé simultanément sur l'ensemble des fibres optiques,

3. Dispositif selon l'une quelconque des revendications 1 à 2 **caractérisé en ce qu'**une surface traitée antireflets, notamment dépolie, est affectée à la face frontale de la fibre optique.

4. Dispositif selon la revendication 3 **caractérisé en ce que** la face frontale de la fibre optique tournée vers la source de lumière (7) est non réfléchissante.

5. Dispositif selon la revendication 3 ou 4, **caractérisé en ce que** pour le traitement antireflets ou le dépolissage, la fibre optique est recouverte de fines couches anti-réfléchissantes, voire d'un vernis mat ou d'un film adhésif dépoli.

6. Dispositif selon l'une quelconque des revendications 1 à 5 **caractérisé en ce que** plusieurs sources de lumière éclairent tous les torons de fibres de verre (3).

7. Dispositif selon l'une quelconque des revendications 1 à 6 **caractérisé en ce que** le photocapteur est un capteur de surface.

8. Dispositif selon l'une quelconque des revendications 1 à 6 **caractérisé en ce que** le photocapteur est conçu comme un appareil photo.

9. Dispositif selon l'une quelconque des revendications 1 à 8 **caractérisé en ce que** la surface à mesurer est un doigt ou une main ou un pied, les élévations et/ou les abaissements représentant le dessin de la peau.

10. Dispositif selon la revendication 1 **caractérisé en ce que** sont prévus plusieurs sources de lumière (2) émettant une lumière de longueurs d'ondes différentes ou bien un photocapteur (1) enregistrant les couleurs.

11. Dispositif selon l'une quelconque des revendications 1 à 10 **caractérisé en ce que** les sources de lumière (7) émettent de la lumière blanche, rouge, verte et/ou bleue et en particulier de la lumière infrarouge.

12. Dispositif selon l'une quelconque des revendications 1 à 11 **caractérisé en ce que** les sources de lumière (7) sont conçues comme des diodes électroluminescentes.

13. Dispositif selon l'une quelconque des revendications 1 à 12 **caractérisé en ce qu'**au moins un filtre couleurs est affecté au photocapteur (1).

14. Dispositif selon l'une quelconque des revendications 1 à 13 **caractérisé en ce qu'**un filtre gris est affecté au photocapteur (1) pour accroître l'immunité contre la lumière ambiante.

15. Dispositif selon l'une quelconque des revendications 1 à 13 **caractérisé en ce qu'**un filtre gris est affecté à la plaque de fibres optiques (6) pour accroître l'immunité contre la lumière ambiante.

16. Procédé pour la reconnaissance d'une empreinte digitale, d'une empreinte de pied ou de main concernant le fonctionnement du dispositif selon l'une des revendications 1 à 15, sachant qu'un photocapteur optique (1) et au moins une source lumineuse (7) sont couplés à une unité de traitement et de contrôle (9), la luminosité de la lumière réfléchie est mesurée par le même toron de fibres de verre (3) à travers lequel la surface est éclairée à l'aide d'un photocapteur, et le photocapteur (1) exécute, immédiatement après la détection d'un contact de la peau avec la surface d'appui (4), plusieurs mesures de luminosité dont les résultats sont évalués par l'unité d'évaluation et de contrôle (9), **caractérisé en ce que** le mesurage se produit séparément dans la zone des élévations et des abaissements des lignes papillaires de l'épiderme.

17. Procédé selon la revendication 16 **caractérisé en ce que** la détection d'un contact de la surface d'appui (4) avec la peau est réalisée avec un procédé de mesurage capacitif, résistif ou optique.

18. Procédé selon les revendications 16 ou 17, **caractérisé en ce que** toutes les sources de lumière simultanément, ou au moins une source de lumière (7) émettant une lumière blanche ou infrarouge sont allumées et que les longueurs d'onde de la lumière incidente sont différenciées avec un filtre couleurs affecté à un photocapteur (1) aux fins de mesures de la luminosité.

19. Procédé selon la revendication 18 **caractérisé en ce que** les sources de lumière (7) sont pulsées et commandées par l'unité de traitement et de contrôle (9) ou alimentées en permanence en tension.

20. Procédé selon la revendication 19 **caractérisé en ce que** la source de lumière utilisée (7) est une source de lumière naturelle ou provenant d'un éclairage ambiant.

21. Méthode pour différencier un doigt ou une main vivants d'une falsification à l'aide d'un procédé selon la revendication 16, **caractérisé en ce que** la luminosité des différentes plages spectrales de la peau exposées à la lumière incidente est modifiée au cours des premières 300 à 1 500 ms suivant la pose du doigt ou de la main, de façon spécifique en fonction du refoulement du sang, notamment lors d'une mesure dans la région de la lumière rouge, en particulier vers 630 nm, et de la lumière infrarouge, en particulier vers 820 à 880 nm.
